# EUROPEAN PATENT APPLICATION

(11) **EP 2 128 692 A1**
(43) Date of publication of application: **02.12.2009**
(21) Application number: 09251082.5
(22) Date of filing: 09.04.2009
(51) Int. Cl.: G03B 9/06

(54) **Light quantity adjusting device, lens barrel and image pickup apparatus**

(30) Priority: 30.05.2008 JP 2008141964
(71) Applicant: Sony Corporation, Tokyo 108-0075 (JP)
(72) Inventor: Ohkuma, Hideo, Tokyo (JP)
(74) Representative: Robinson, Nigel Alexander Julian

(57) **Abstract**

Disclosed herein is a light quantity adjusting device including a base formed with a window; first and second diaphragm blades provided on the base and adapted to adjust a size of a diaphragm aperture; first and second cam-pins adapted to shift the first and second diaphragm blades; and a plurality of guide pins provided on the base so as to project therefrom.

## Description

The present invention relates to a light quantity adjusting device, a lens barrel and an image pickup apparatus.

A lens barrel of an image pickup apparatus such as a video camera or a digital still camera is frequently provided with a light quantity adjusting device (a diaphragm device) which adjusts the size of a diaphragm aperture whose center is located on the optical axis of an image pickup optical system incorporated in the lens barrel.

One of such light quantity adjusting devices is proposed in which an actuator drives the pair of diaphragm blades. See Japanese Patent Laid-open No. 2004-109531.

This light quantity adjusting device is such that each of the diaphragm blades includes a cam groove, two guide grooves, an aperture-forming edge portion and a light-shielding portion.

The diaphragm blade is supported linearly shiftably by the guide pin engaged with the two pins. Cam pins engaged with the cam grooves of the diaphragm blades are pivoted by the actuator. Thus, the diaphragm blades are shifted oppositely to each other and the distance between the aperture-forming edge portions of the diaphragm blades are changed to adjust the size of a diaphragm aperture.

However, in the traditional device described above, the cam groove and one of the two guide grooves are arranged so as to overlap each other in the direction perpendicular to the shifting direction of each of the diaphragm blades.

It is difficult, therefore, to reduce the size of the diaphragm blade in the direction perpendicular to the shifting direction of the diaphragm blade. This is disadvantageous to downsize the light quantity adjusting device, the lens barrel and the image pickup device.

It is desirable to provide a light quantity adjusting device, a lens barrel and an image pickup apparatus that are advantageous to downsizing.

According to an at least preferred embodiment of the present invention, there is provided a light quantity adjusting device including a base formed with a window; first and second diaphragm blades provided on the base and adapted to adjust a size of a diaphragm aperture; first and second cam-pins adapted to shift the first and second diaphragm blades; and a plurality of guide pins provided on the base so as to project therefrom; wherein the first diaphragm blade includes a first cam groove engaged with the first cam-pin, a first guide groove extending linearly and engaged with one of the plurality of guide pins, a first light-shielding plate portion, a first aperture-forming edge portion provided at an edge portion of the first light-shielding plate portion to edge one of opposite edge portions of the diaphragm aperture, and a second guide groove linearly extending in the same direction as that of the first guide groove or parallel to the first guide groove and engaged with one of the plurality of guide pins, and the first cam groove, the first guide groove, the first light-shielding plate portion, the first aperture-forming edge portion and the second guide groove are formed to be arranged in this order in the shifting direction of the first diaphragm blade without overlapping one another, and the second diaphragm blade includes a second cam groove engaged with the second cam-pin, a third guide groove extending linearly and engaged with one of the plurality of guide pins, a second aperture-forming edge portion edging one of the opposite edge portions of the diaphragm aperture, a second light-shielding plate portion continuous with the second aperture-forming edge portion, and a fourth guide groove linearly extending in the same direction as that of the third guide groove or parallel to the third guide groove and engaged with one of the plurality of guide pins, and the second cam groove, the third guide groove, the second aperture-forming edge portion, the second light-shielding plate portion and the fourth guide groove are formed to be arranged in this order in the shifting direction of the second diaphragm blade without overlapping one another.

According to another at least preferred embodiment of the present invention, there is provided a lens barrel equipped with a light quantity adjusting device, the light quantity adjusting device including a base formed with a window; first and second diaphragm blades provided on the base and adapted to adjust a size of a diaphragm aperture; first and second cam-pins adapted to shift the first and second diaphragm blades; and a plurality of guide pins provided on the base so as to project therefrom; wherein the first diaphragm blade includes a first cam groove engaged with the first cam-pin, a first guide groove extending linearly and engaged with one of the plurality of guide pins, a first light-shielding plate portion, a first aperture-forming edge portion provided at an edge portion of the first light-shielding plate portion to edge one of opposite edge portions of the diaphragm aperture, and a second guide groove linearly extending in the same direction as that of the first guide groove or parallel to the first guide groove and engaged with one of the plurality of guide pins, and the first cam groove, the first guide groove, the first light-shielding plate portion, the first aperture-forming edge portion and the second guide groove are formed to be arranged in this order in the shifting direction of the first diaphragm blade without overlapping one another, and the second diaphragm blade includes a second cam groove engaged with the second cam-pin, a third guide groove extending linearly and engaged with one of the plurality of guide pins, a second aperture-forming edge portion edging one of the opposite edge portions of the diaphragm aperture, a second light-shielding plate portion continuous with the second aperture-forming edge portion, and a fourth guide groove linearly extending in the same direction as that of the third guide groove or parallel to the third guide groove and engaged with one of the plurality of guide pins, and the second cam groove, the third guide groove, the second aperture-forming edge portion, the second light-shielding plate portion and the fourth guide groove are formed to be arranged in this order in the shifting direction of the second diaphragm blade without overlapping one another.

According to another at least preferred embodiment of the present invention, there is provided an image pickup apparatus equipped with a light quantity adjusting device, the quantity adjusting device including a base formed with a window; first and second diaphragm blades provided on the base and adapted to adjust a size of a diaphragm aperture; first and second cam-pins adapted to shift the first and second diaphragm blades; and a plurality of guide pins provided on the base so as to project therefrom; wherein the first diaphragm blade includes a first cam groove engaged with the first cam-pin, a first guide groove extending linearly and engaged with one of the plurality of guide pins, a first light-shielding plate portion, a first aperture-forming edge portion provided at an edge portion of the first light-shielding plate portion to edge one of opposite edge portions of the diaphragm aperture, and a second guide groove linearly extending in the same direction as that of the first guide groove or parallel to the first guide groove and engaged with one of the plurality of guide pins, and the first cam groove, the first guide groove, the first light-shielding plate portion, the first aperture-forming edge portion and the second guide groove are formed to be arranged in this order in the shifting direction of the first diaphragm blade without overlapping one another, and the second diaphragm blade includes a second cam groove engaged with the second cam-pin, a third guide groove extending linearly and engaged with one of the plurality of guide pins, a second aperture-forming edge portion edging one of the opposite edge portions of the diaphragm aperture, a second light-shielding plate portion continuous with the second aperture-forming edge portion, and a fourth guide groove linearly extending in the same direction as that of the third guide groove or parallel to the third guide groove and engaged with one of the plurality of guide pins, and the second cam groove, the third guide groove, the second aperture-forming edge portion, the second light-shielding plate portion and the fourth guide groove are formed to be arranged in this order in the shifting direction of the second diaphragm blade without overlapping one another.

According to at least preferred embodiments of the present invention, the first diaphragm blade is formed such that the first cam groove, the first guide groove, the first light-shielding plate portion, the first aperture-forming edge portion and the second guide groove are arranged in this order along the shifting direction without overlapping one another. In addition, the second diaphragm blade is formed such that the second cam groove, the third guide groove, the second aperture-forming edge portion, the second light-shielding plate portion and the fourth guide groove are arranged in this order along the shifting direction without overlapping one another.

Thus, the first and second diaphragm blades can be reduced in the space occupied thereby in the direction perpendicular to the shifting direction of the first and second diaphragm blades, which is advantageous to downsizing.

Embodiments of the invention will now be described by way of example only with reference to the accompanying drawings, in which:
Fig. 1 is a perspective view of an image pickup apparatus of an example embodiment;
Fig. 2 is a perspective view of the image pickup apparatus as viewed from the rear thereof;
Fig. 3 is a perspective view of a lens barrel;
Fig. 4 is a cross-sectional view taken along line X-X of Fig. 3;
Fig. 5 is a block diagram illustrating a configuration of the image pickup apparatus;
Fig. 6 is an exploded perspective view of a light quantity adjusting device as viewed from above;
Fig. 7 is an exploded perspective view of the light quantity adjusting device as viewed from below;
Fig. 8 illustrates a base as viewed from below;
Fig. 9 illustrates a holding plate as viewed from above;
Fig. 10 illustrates a first diaphragm blade as viewed from below;
Fig. 11 illustrates a second diaphragm blade as viewed from below;
Fig. 12 is an explanatory view illustrating an opening state resulting from the first and second diaphragm blades;
Fig. 13 is an explanatory view illustrating a fully-closed state resulting from the first and second diaphragm blades;
Fig. 14 illustrates the light quantity adjusting device forming the opening state as viewed from below;
Fig. 15 illustrates the light quantity adjusting device forming the fully-closed state as viewed from below; and
Fig. 16 is a cross-sectional view taken along line X-X of Fig. 14.

### Image Pickup Apparatus 10

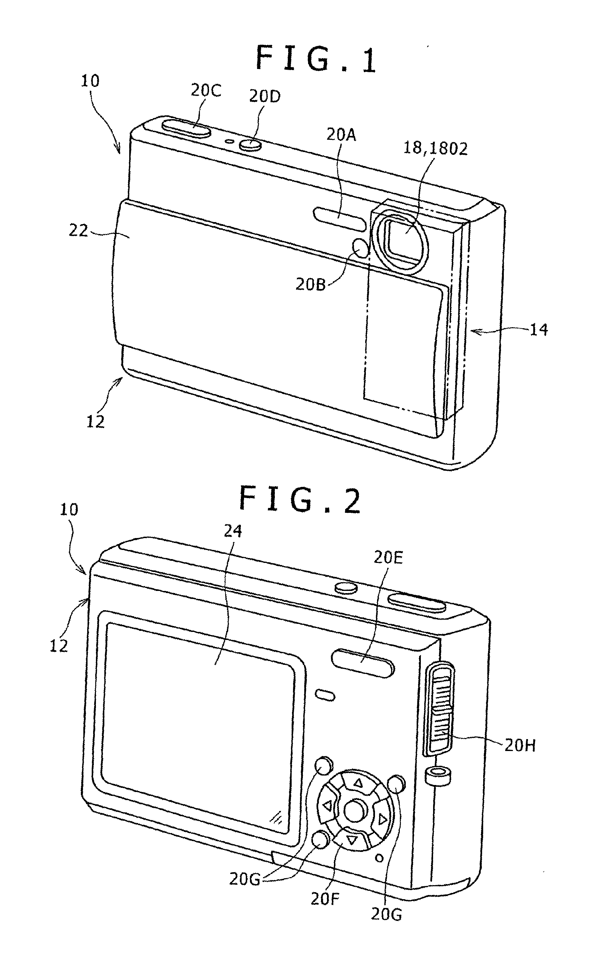

Fig. 1 is a perspective view of an image pickup apparatus 10 according to an example embodiment. Fig. 2 is a perspective view of the image pickup apparatus 10 as viewed from the rear thereof.

The image pickup apparatus 10 is a digital still camera as illustrated in Figs. 1 and 2.

The image pickup apparatus 10 includes a rectangular plate-like casing 12 constituting an exterior.

It is to be noted that, in this specification, the terms "front" and "rear" represent a subject side and the side opposite to the subject side, respectively, and the terms "left" and "right" are based on the image pickup apparatus viewed from the front.

A lens barrel 14 is incorporated in the right portion of the casing 12 as indicated with a two-dot chain line in the figure.

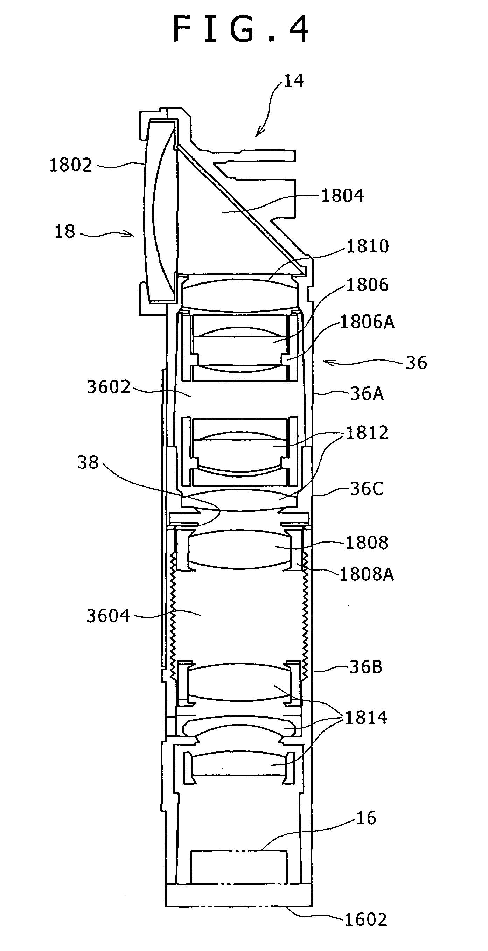

The lens barrel 14 is provided with an image pickup optical system 18 adapted to lead a subject image to an image pickup element 16 (Fig. 4).

An object lens 1802 located at the front most of the image pickup optical system 18 is disposed to face the front of the casing 12 via a lens window provided in the front face of the casing 12.

A flash 20A adapted to emit photographing-assist light and a self-timer lamp 20B are provided on the front face of the casing 12 at a position a little to the right.

A cover 22 is provided on the front face of the casing 12 so as to be slidable upward and downward. This cover 22 is slid between a lower limit position where the object lens 1802, the flash 20A and the self-timer lamp 20B are exposed to the front and an upper limit position where they are covered thereby.

A shutter button 20C and a power source button 20D are provided on the upper surface of the casing 12 at a position a little to the left.

A display (a liquid crystal display device) 24 on which an image such as a still image or moving images, characters, etc. are displayed, a zoom switch 20E used to perform the zooming operation of the image pickup system 18, a cross-shape switch 20F adapted to perform various operations, and a plurality of operation buttons 20G are provided on the rear face of the casing 12.

A mode switch 20H is provided on the left lateral surface of the casing 12 to selectively bring the image pickup device 10 into a still image shooting mode, a moving image shooting mode, a reproduction/edit mode or other modes.

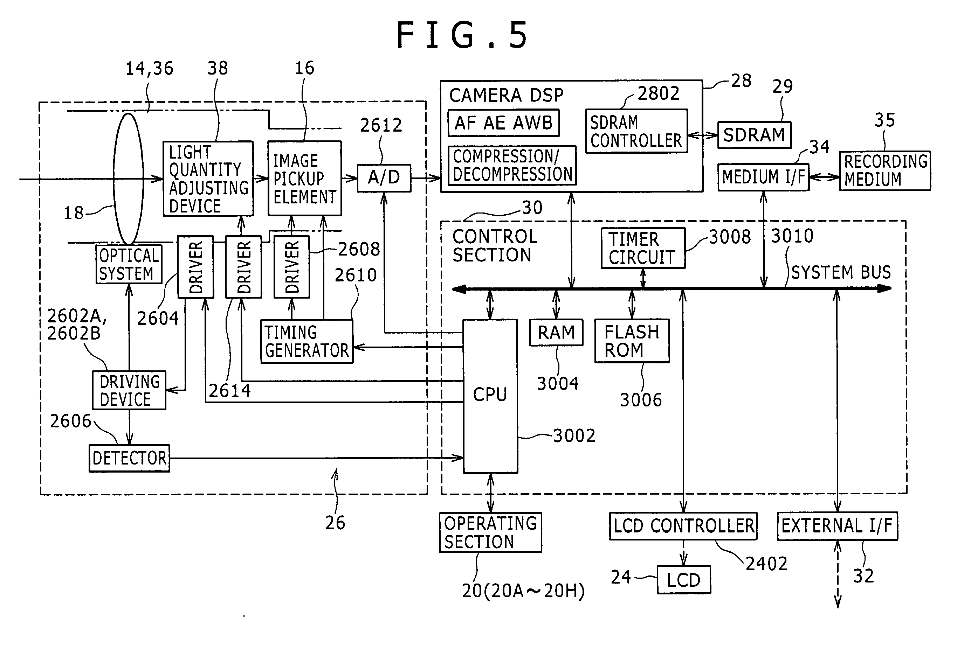

These switches 20A through 20H constitute an operating section 20 (Fig. 5).

### (Lens Barrel 14)

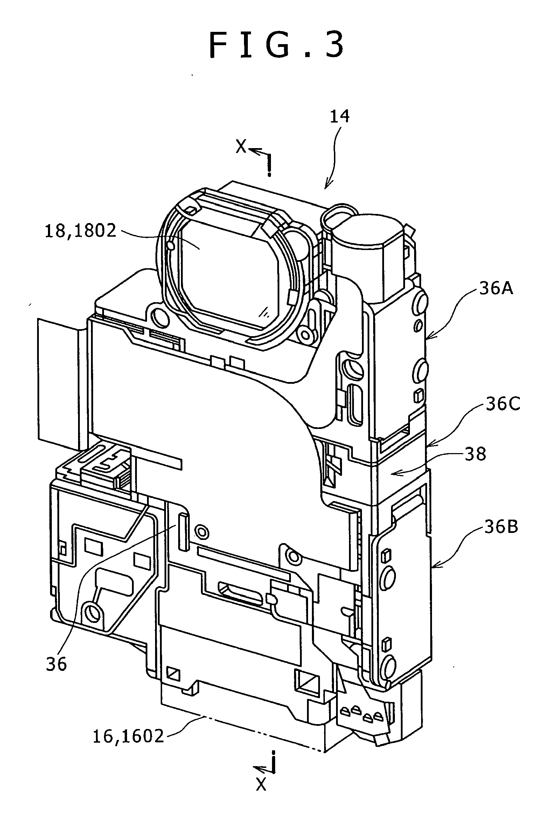

Fig. 3 is a perspective view of the lens barrel 14 and Fig. 4 is a cross-sectional view taken along line X-X of Fig. 3.

Referring to Figs. 3 and 4, the lens barrel 14 includes a barrel 36, an image pickup element 16, an image pickup optical system 18 and a light quantity adjusting device 38 according to the embodiment of the present invention.

The image pickup element 16 is composed of a CCD (charge-coupled device) or a CMOS (complementary metal-oxide-semiconductor) sensor adapted to pick up a subject image focused by the image pickup optical system 18.

The image pickup optical system 18 is configured to include an object lens 1802, a prism 1804, a zooming movable lens group 1806, a focusing movable lens group 1808, a first fixed lens group 1810, a second fixed lens group 1812, and a third fixed lens group 1814.

The lens barrel 14 further includes a zooming driving device 2602A (Fig. 5) and a focusing driving device 2602B (Fig. 5).

### (Barrel 36)

The barrel 36 is wholly formed like a flat plate having width, length and thickness. The image pickup element 16 and the image pickup optical system 18 are disposed at the widthwise central portion of the barrel 36 so as to align with each other in the longitudinal direction of the barrel 36.

The barrel 36 is composed of a first barrel divided body 36A and a second barrel divided body 36B that are divided in the longitudinal direction thereof and a third barrel divided body 36C put between the first and second barrel divided bodies 36A, 36B.

### (First Barrel Divided Body 36A)

The first barrel divided body 36A is internally provided with a downward opening upper component-accommodating space 3602. The object lens 1802 is attached to a front face of the first barrel divided body 36A at a widthwise central upper portion.

The prism 1804 is adapted to reflect downward (toward the image pickup element 16) an image captured by the object lens 1802 and uses a prism in the present embodiment. The prism 1804 is disposed in the upper component-accommodating space 3602 at a position opposed to the object lens 1802.

The first fixed lens group 1810 and the zooming movable lens group 1806 are disposed in the upper component-accommodating space 3602 and below the prism 1804 in this order.

### (Zooming Movable Lens Group 1806)

The zooming movable lens group 1806 is supported by a zooming lens frame 1806A.

The zooming movable lens group 1806 is configured such that it is supported by a guide mechanism not shown via the zooming lens frame 1806A so as to be movable in the optical-axial direction of the image pickup optical system 18 and it is moved in the optical-axial direction of the image pickup system 18 by a zooming driving device 2602A (Fig. 5).

The guide mechanism is configured to include a bearing hole provided in the zooming lens frame 1806A and a guide shaft inserted into the bearing hole. Traditionally known guide mechanisms are adoptable as such a guide mechanism.

The zooming driving device 2602A is configured to include a female screw member connected to the zooming lens frame 1806A; a male screw member threadedly engaged with the female screw member; and a motor for rotatably driving the male screw member. Traditionally known guide members are adoptable as such a driving device.

### (Third Barrel Divided Body 36C)

The third barrel divided body 36C includes an inner portion opposed to the inside of the upper component-accommodating space 3602 and an outer portion located outside the upper component-accommodating space 3602.

The second fixed lens group 1812 is attached to the inner portion in such a manner that its optical axis is coincident with that of the zooming movable lens group 1806.

The light quantity adjusting device 38 is provided behind the second fixed lens 1812, that is, forward of the image pickup element 16 on the optical axis of the image pickup optical system 18.

### (Second Barrel Divided Body 36B)

The second barrel divided body 36B is internally formed with a vertically opening lower component-accommodating space 3604. The image pickup device 16 is attached to the lower portion of the second barrel divided body 36B via a holder 1602 to close the lower end of the lower component-accommodating space 3604.

The focusing movable lens group 1808 and the third fixed lens group 1814 are arranged inside the lower component-accommodating space 3604 at a widthwise central position of the second barrel divided body 36B.

### (Focusing movable Lens Group 1808)

The focusing movable lens group 1808 is supported by a focusing lens frame 1808A.

The focusing movable lens group 1808 is configured such that it is supported by a guide mechanism not shown via the focusing lens frame 1808A so as to be movable in the optical-axial direction of the image pickup system 18 and to be moved in the optical-axial direction of the image pickup system 18 by the focusing driving device 2602B (Fig. 5).

The guide mechanism is configured to include a bearing hole provided in the focusing lens frame 1808A and a guide shaft inserted into the bearing hole. Traditionally known guide mechanisms are adoptable as such a guide mechanism.

The focusing driving device 2602B is configured to include a female screw member connected to the focusing lens frame 1808A; a male screw member threadedly engaged with the female screw member; and a motor for rotatably driving the male screw member. Traditionally known guide members are adoptable as such a driving device.

### (Third Fixed Lens Group 1814)

The third fixed lens group 1814 is disposed in the lower component-accommodating space 3604 below the focusing movable lens group 1808.

### (Control System)

Fig. 5 is a block diagram illustrating the configuration of the image pickup device 10.

The image pickup apparatus 10 includes a drive section 26, a signal processing section 28, a control section 30, an operating section 20, an external interface 32 and a medium interface 34 as well as the lens barrel 14 and display 24 described earlier.

The drive section 26 includes a driver 2604, a detector 2606, a driver 2608, a timing generator 2610, an A/D converter 2612 and a driver 2614 as well as the zooming driving device 2602A and the focusing driving device 2602B described earlier.

The driver 2604 is adapted to supply a drive signal to the zooming driving device 2602A and to the focusing driving device 2602B.

The detector 2606 is adapted to detect the travel distances of the movable lens groups 1806 and 1808 moved by the zooming driving device 2602A and the focusing driving device 2602B, respectively.

The driver 2608 is adapted to supply a drive signal to the image pickup element 16.

The timing generator 2610 is adapted to supply a timing signal to the image pickup element 16 and to the driver 2608.

The A/D converter 2612 A/D subjects the image pickup signal generated by the image pickup element 16 to A/D conversion.

The driver 2614 supplies a drive signal to the light quantity adjusting device 38.

The signal processing section 28 performs predetermined signal processing on an image-pickup signal supplied from the A/D converter 2612 for generating image data and performing various operations related to photographing (autofocus operation, automatic exposure operation, automatic white balance operation, compression and decompression of image data, etc.). The signal processing section 28 is composed of e.g. DSP.

The signal processing section 28 uses a memory (SDRAM) 29 via a SDRAM controller 2802 as a working area for image data processing.

The control section 30 includes a CPU 3002, a RAM 3004, a flash ROM 3006, a timer circuit 3008 and a system bus 3010 connecting them together.

The CPU 3002 is operated based on a control program stored in the flash ROM 3006.

The CPU 3002 exchanges data with the RAM 3004, the flash ROM 3006, and the timer circuit 3008 via the system bus 3010. In addition, the CPU 3002 operates in response to an operation instruction supplied from the operating section 20 and to a detection signal supplied from the detector 2606. Further, the CPU 3002 exercises control on the drivers 2604, 2614, timing generator 2610 and A/D converter 2612 of the driving section 26.

The CPU 3002 exchanges via a medium interface 34 data containing image data with a recording medium 35 such as an embedded memory or a memory card.

The CPU 3002 displays image data, etc. on the display 24 via the LCD controller 2402.

The CPU 3002 exchanges data containing image data with the external device (a personal computer or a printer) via the external interface 32.

### (Light Quantity Adjusting Device 38)

A detailed description is next given of the light quantity adjusting device 38.

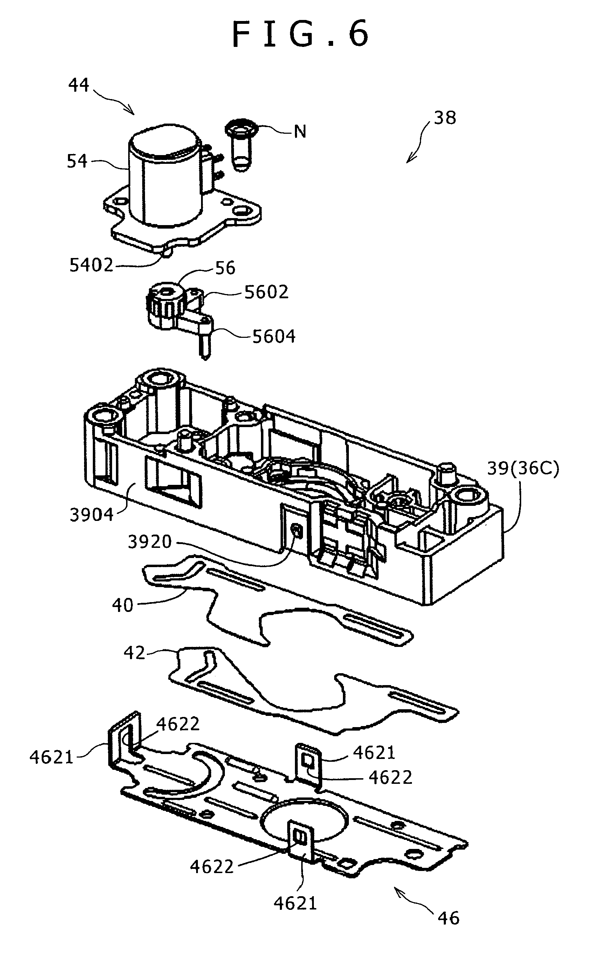

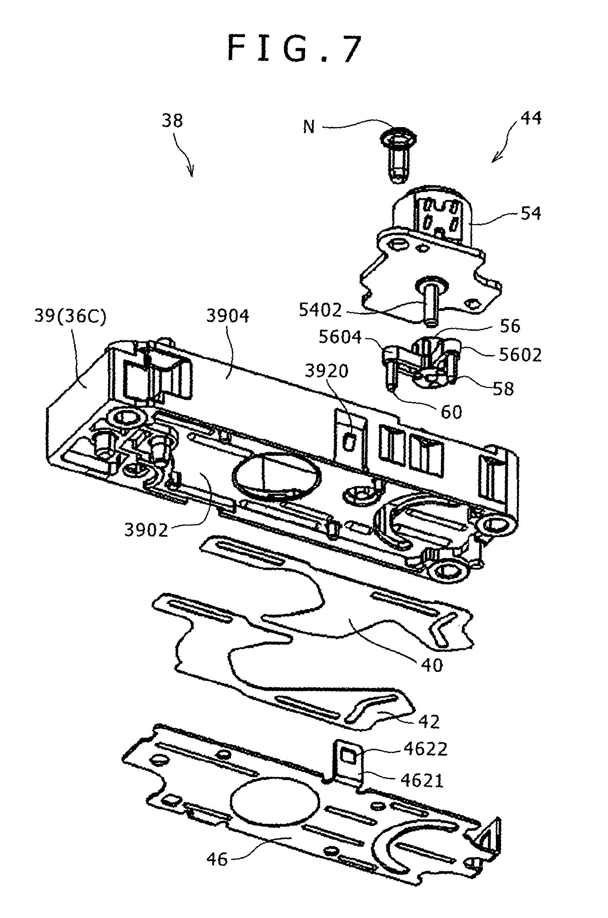

Fig. 6 is an exploded perspective view of a light quantity adjusting device 38 as viewed from above; Fig. 7 is an exploded perspective view of the light quantity adjusting device 38 as viewed from below.

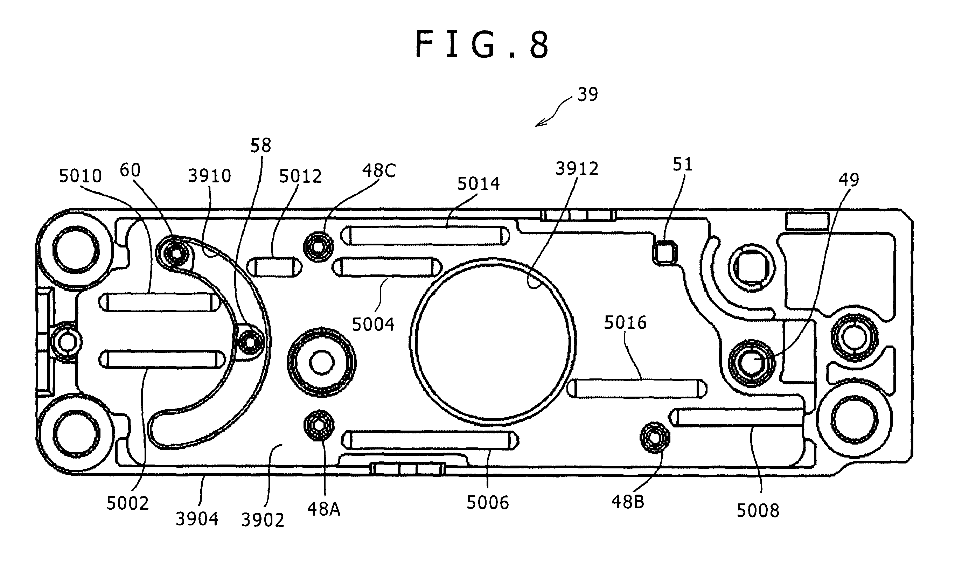

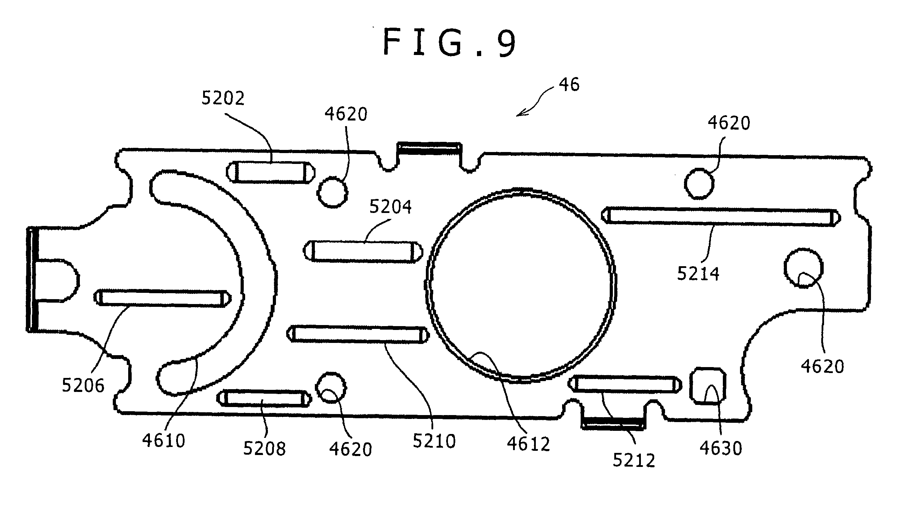

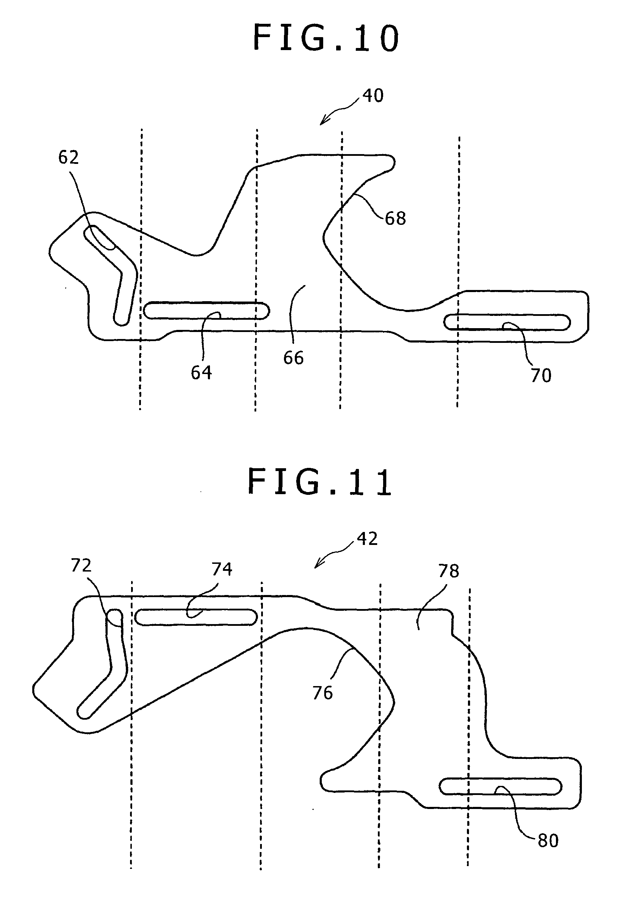

Fig. 8 illustrates a base 39 as viewed from below; Fig. 9 illustrates a holding plate 46 as viewed from above; Fig. 10 illustrates a first diaphragm blade 40 as viewed from below; Fig. 11 illustrates a second diaphragm blade 42 as viewed from below.

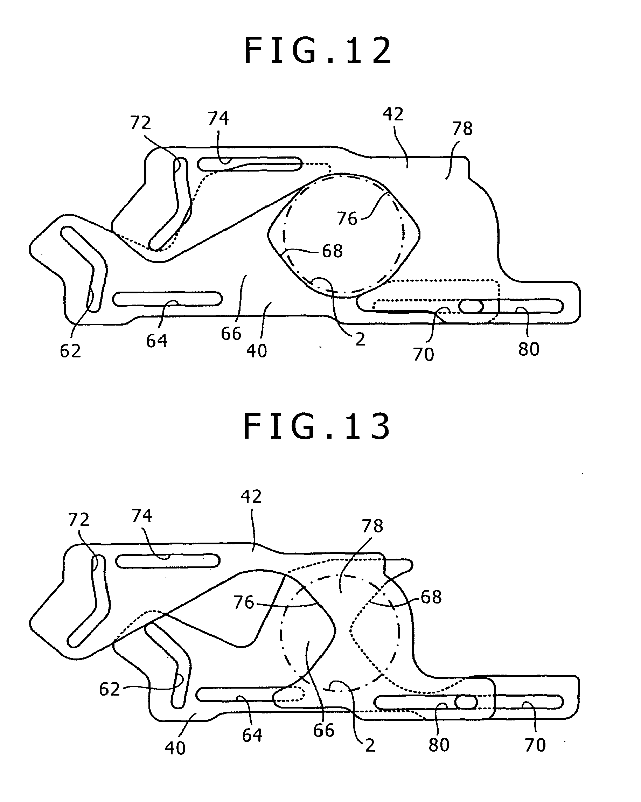

Fig. 12 is an explanatory view illustrating an opening state resulting from the first and second diaphragm blades 40, 42; Fig. 13 is an explanatory view illustrating a fully-closed state resulting from the first and second diaphragm blades 40, 42.

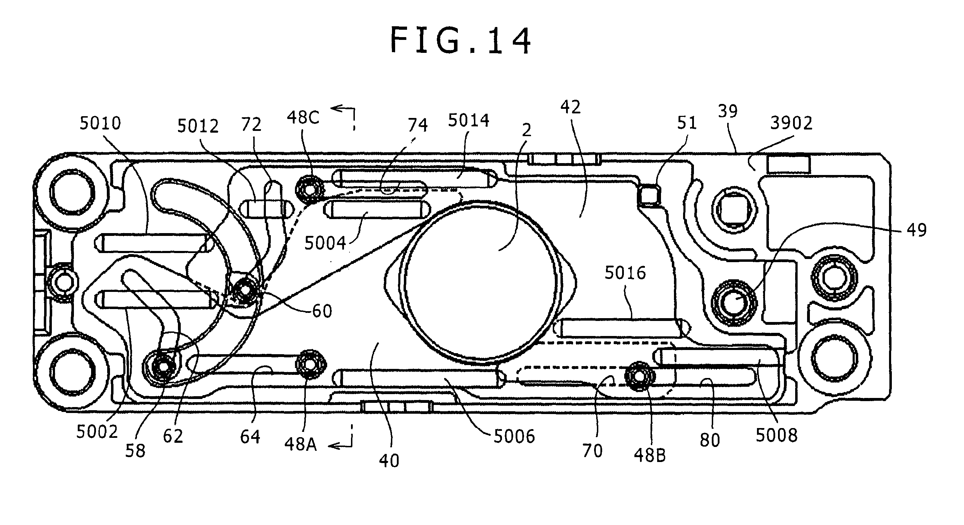

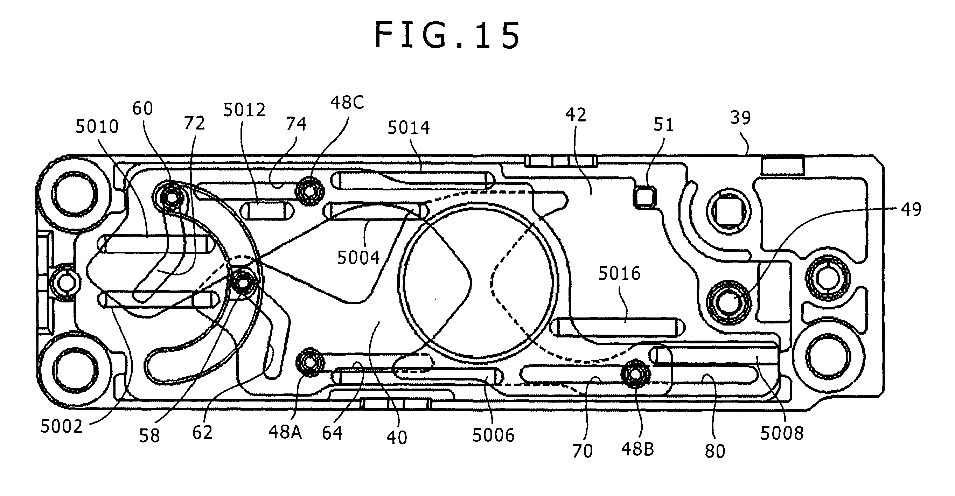

Fig. 14 illustrates the light quantity adjusting device 38 forming the opening state as viewed from below; Fig. 15 illustrates the light quantity adjusting device 38 forming the fully-closed state as viewed from below.

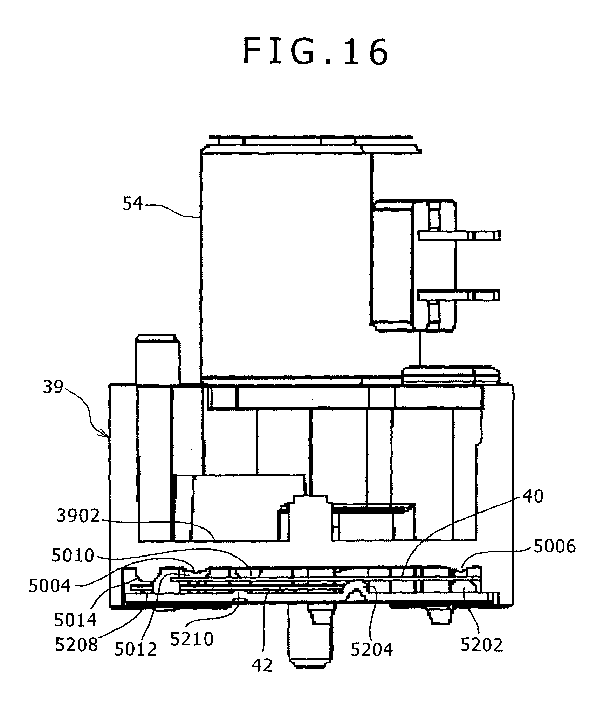

Fig. 16 is a cross-sectional view taken along line X-X of Fig. 14.

The light quantity adjusting device 38 is configured to include the base 39, the first and second diaphragm blades 40, 42, a drive mechanism 44 and a holding plate 46.

### (Base 39)

The third barrel divided body 36C is used as the base 39 of the light quantity adjusting device 38 in the embodiment.

Referring to Figs. 6 and 7, the third barrel divided body 36C includes an elongate rectangle bottom wall 3902 and lateral walls 3904 rising from the four respective sides of the bottom wall 3902.

Referring to Fig. 8, the bottom wall 3902 is formed with a notch 3910 adapted to permit the pivotal movement of the first and second cam-pins 58, 60 and with a window 3912 forming the diaphragm aperture 2.

Three guide pins 48A, 48B, 48C and a single positioning pin 49 are provided on the lower surface of the bottom wall 3902 so as to project therefrom.

As illustrated in Fig. 7, the first and second diaphragm blades 40, 42 are disposed on the lower surface of the bottom wall 3902 by a holding plate 46 attached from below to the lower surface of the bottom wall 3902.

First through fourth projecting ridges 5002, 5004, 5006, 5008 are provided on the lower surface of the bottom wall 3902 so as to be abutted against and position the first diaphragm blade 40 in the thickness direction of the bottom wall 3902 as illustrated in Fig. 8.

Fifth through eighth projecting ridges 5010, 5012, 5014, 5016 are provided on the lower surface of the bottom wall 3902 so as to be abutted against and position the second diaphragm blade 42 in the thickness direction of the bottom wall 3902.

As illustrated in Fig. 6 and 7, among the lateral walls 3904 of four sides, three lateral walls 3904 each located on a corresponding one of two long sides and one short side are provided with engaging projections 3920 for attachment of the holding plate 46.

Incidentally, the first through eighth projecting ridges 5002, 5004, 5006, 5008, 5010, 5012, 5014, 5016 extend in the shifting direction of the first and second diaphragm blades 40, 42 described later.

Reference numeral 51 in Figs. 8 and 14 denotes a stopper pin abutted against the first and second diaphragm blades 40, 42 to restrict the shifting range thereof.

Referring to Fig. 9, ninth and tenth projecting ridges 5202, 5204 are provided on the holding plate 46 at a position facing the first diaphragm blade 40 so as to be abutted against the first diaphragm blade 40 and position it in the thickness direction of the bottom plate 3902.

Eleventh through fifteenth projecting ridges 5206, 5208, 5210, 5212, 5214 are provided on the holding plate 46 at a position facing the second diaphragm blade 42 so as to be abutted against and position the second diaphragm blade 42 in the thickness direction of the bottom plate 3902.

The holding plate 46 is formed with a notch 4610 adapted to permit the pivotal movement of the first and second cam-pins 58, 60 and with a window 4612 forming the diaphragm aperture 2.

The holding plate 46 is formed with four positioning holes 4620 adapted to receive guide pins 48A, 48B, 48C and a positioning pins 49 inserted therethrough.

As illustrated in Figs. 6 and 7, the holding plate 46 is formed with bent retaining pieces 4621 at respective positions corresponding to the two long sides and short side of the base 39. The retaining pieces 4621 are provided with retaining holes 4622. The three engaging projections 3920 of the base 39 are each engaged with a corresponding one of the engaging holes 4622 provided in the respective engaging pieces 4621 so that the holding plate 46 is attached to the base 39.

Incidentally, the ninth through fifteenth projecting ridges 5202, 5204, 5206, 5208, 5210, 5212, 5214 extend in the shifting direction of the first and second diaphragm blades 40, 42 described later.

Reference numeral 4630 in Fig. 9 denotes a stopper-pin-turnout aperture adapted to receive the stopper pin 51 (Fig. 8) inserted therethrough.

### (Drive mechanism 44)

As illustrated in Figs. 6 and 7, the drive mechanism 44 is configured to include an actuator 54, an arm 56, a first cam-pin 58 and a second cam-pin 60.

The actuator 54 is a pulse motor in the present embodiment and has a drive shaft 5402 which is turnably driven.

The arm 56 is integrally turnably coupled to the drive shaft 5402. The arm 56 is pivoted integrally with the drive shaft 5402 by turning or pivoting the drive shaft 5402 in a defined angular range.

The arm 56 is provided with two arms, i.e., a first arm 5602 and a second arm 5604.

The first cam-pin 58 is provided at a tip of the first arm 5602 and a second cam-pin 60 is provided at a tip of the second arm 5604. A phase difference between the first cam-pin 58 and the second cam-pin 60 are set at less than 90 degrees. Thus, the space occupied by the drive mechanism 44 is reduced.

### (First Diaphragm Blade 40)

Referring to Fig. 10, the first diaphragm blade 40 is formed of a synthetic resin-made plate having a light shielding effect.

The first diaphragm blade 40 includes a first cam groove 62, a first guide groove 64, a first light-shielding plate portion 66, a first aperture-forming edge portion 68 and a second guide groove 70.

The first cam groove 62 is a portion engaged with the first cam-pin 58. The first cam-pin 58 is engaged with the first cam groove 62 and pivoted together with the first arm 5602, thereby shifting the first diaphragm blade 40.

The first guide groove 64 linearly extends and is engaged with the guide pin 48A of the three guide pins 48A, 48B, 48C.

The first light-shielding plate portion 66 is a portion shielding light.

The first aperture-forming edge portion 68 is a portion that is provided at an end of the first light-shielding plate portion 66 to edge one of the opposite edges of the diaphragm aperture 2 and that extends in a V-shape.

The second guide groove 70 linearly extends in the same direction as that of the first guide groove 64 or parallel thereto and is engaged with one guide pin 48B of the three guide pins 48A, 48B, 48C.

Referring to Figs. 14, 15, the guide pins 48A and 48B are engaged with the first and second guide grooves 64 and 70, respectively, so that the first diaphragm blade 40 is guided linearly shiftably by the base 39.

As illustrated in Fig. 10, the first cam groove 62, the first guide groove 64, the first light-shielding plate portion 66, the first aperture-forming edge portion 68 and the second guide groove 70 are formed to be arranged in this order along the shifting direction of the first and second diaphragm blades 40, 42 without overlapping one another.

### (Second Diaphragm Blade 42)

Referring to Fig. 11, the second diaphragm blade 42 is formed of a synthetic resin-made plate having a light shielding effect.

The second diaphragm blade 42 includes a second cam groove 72, a third guide groove 74, a second aperture-forming edge portion 76, a second light-shielding plate portion 78, and a fourth guide groove 80.

The second cam groove 72 is a portion engaged with the second cam-pin 60. The second cam-pin 60 is engaged with the second cam groove 72 and pivoted together with the second arm 5604, thereby shifting the second diaphragm blade 42.

The third guide groove 74 linearly extends and is engaged with the guide pin 48C of the three guide pins 48A, 48B, 48C.

The second aperture-forming edge portion 76 is a portion that edges one of the opposite edge portions of the diaphragm aperture 2, extends in a V-shape and is disposed oppositely to the first aperture-forming edge portion 68.

The second light-shielding plate portion 78 is a portion that is continuous with the second aperture-forming edge portion 76 and that is adapted to block light.

The fourth guide groove 80 linearly extends in the same direction as that of the third guide groove 74 or parallel thereto and is engaged with one guide pin 48B of the three guide pins 48A, 48B, 48C.

In other words, referring to Figs. 14, 15, the second guide groove 70 is located at a position more away from the first cam groove 62 than the first guide groove 64 and the fourth guide groove 80 is located at a position more away from the second cam groove 72 than the third guide groove 74. The second guide groove 70 and the fourth guide groove 80 overlap each other. The single guide pin 48B is inserted into the second and fourth guide grooves 70, 80.

The guide pins 48C and 48B are engaged with the third and fourth guide grooves 74 and 80, respectively, so that the second diaphragm blade 42 is guided linearly shiftably by the base 39.

As illustrated in Fig. 11, the second cam groove 72, the third guide groove 74, the second aperture-forming edge portion 76, the second light-shielding plate portion 78, and the fourth guide groove 80 are formed to be arranged in this order along the shifting direction of the first and second diaphragm blades 40, 42 without overlapping one another.

### (Assembly)

Assembly is next described.

As illustrated in Figs. 6 and 7, the arm 56 is attached to the drive shaft 5402 of the actuator 54.

In this state, the first and second cam-pins 58, 60 are inserted through the notch 3910 of the base 39 from above the bottom wall 3902 of the base 39 and the actuator 54 is attached to the base 39 with a screw N.

Next, with the base 39 turned upside down, the first cam-pin 58 and the guide pins 48A and 48B are respectively inserted through the first cam groove 62 and first and second guide grooves 64, 70 of the first diaphragm blade 40, and the first diaphragm blade 40 is placed on the lower surface of the bottom wall 3902.

Next, the second cam-pin 60 and the guide pins 48C and 48B are respectively inserted through the second cam groove 72 and third and fourth guide grooves 74 and 80 of the second diaphragm blade 42 and the second diaphragm blade 42 is put on the first diaphragm blade 40.

Next, the holding plate 46 is put on the second diaphragm blade 42. The guide pins 48A, 48B, 48C and positioning pin 49 of the base 39 are each inserted through a corresponding one of the positioning holes 4620 of the holding plate 46. The retaining holes 4622 of the holding plate 46 are each retained by a corresponding one of the retaining projections 3920 of the base 39.

In this way, the first and second diaphragm blades 40, 42 are sandwiched between the bottom wall 3802 of the base 39 and the holding plate 46.

In this state, among the three guide pins 48A, 48B, 48C, the guide pin 48A is inserted through the first guide groove 64 of the first diaphragm blade 40, the guide pin 48C is inserted through the third guide groove 70 of the second diaphragm blade 42, and the guide pin 48B is inserted through both the two guide grooves, i.e., the second guide groove 70 of the first diaphragm blade 40 and the fourth guide groove 80 of the second diaphragm blade 42.

As illustrated in Figs. 8, 9 and 16, the first diaphragm blade 40 is sandwiched between the first through fourth projecting ridges 5002, 5004, 5006, 5008 provided on the bottom wall 3902 and the ninth and tenth projecting ridges 5202, 5204 provided on the holding plate 46. Thus, the first diaphragm blade 40 is positioned in the thickness direction of the bottom wall 3902.

Incidentally, the number of the projecting ridges engaged with a portion of the first diaphragm blade 40 close to the first cam groove 62 is greater than that apart from the first cam groove 62. This intends to make smooth the shifting of the first diaphragm blade 40 at a portion where frictional resistance occurring between the edge portions due to the shifting of the first and second diaphragm blades 40, 42 becomes significant as described later.

The second diaphragm blade 42 is sandwiched between the eleventh through fifteenth projecting ridges 5206, 5208, 5210, 5212, 5214 provided on the holding plate 46 and the fifth through eighth projecting ridges 5010, 5012, 5014, 5016 provided on the bottom wall 3902. Thus, the second diaphragm blade 42 is positioned in the thickness direction of the bottom wall 3902.

Incidentally, the number of the projecting ridges engaged with a portion of the second diaphragm blade 42 close to the second cam groove 72 is greater than that apart from the second cam groove 72. This intends to make smooth the shifting of the second diaphragm blade 42 at a portion where frictional resistance occurring between the edge portions due to the shifting of the first and second diaphragm blades 40, 42 becomes significant as described later.

### (Explanation of Operation)

The motion of the first and second diaphragm blades 40, 42 is explained.

As illustrated in Fig. 14 in the state where the first cam-pin 58 is located at one end of the first cam groove 62 and the second cam-pin 60 is located at one end of the first cam groove 62, the diaphragm aperture 2 is in the opened state as illustrated in Figs. 12 and 14.

If the drive shaft 5402 is normally turned from this state, the first and second cam-pins 58, 60 are pivoted, that is, the first cam-pin 58 is moved from the one end of the first cam-groove 62 toward the other end and the second cam-pin 60 is moved from the one end of the second cam groove 72 toward the other end.

The pivotal movement of the first and second cam-pins 58, 60 linearly shifts the first and second diaphragm blades 40, 42 reversely to each other so that the aperture area of the diaphragm aperture 2 gradually becomes smaller than that of the opened state.

As illustrated in Fig. 15, then, the first cam-pin 58 is located at the other end of the first cam groove 62 and the second cam-pin 60 is located at the other end of the second cam groove 72.

In this state, as illustrated in Figs. 13 and 15, the diaphragm aperture 2 is brought into the fully-closed state, that is, its aperture area becomes equal to zero.

In this way, the diaphragm aperture 2 is brought into the fully closed state by the first and second diaphragm blades 40, 42, and thus, a mechanical shutter is configured.

Incidentally, if the drive shaft 5402 is reversely turned, the reverse operation to the above is performed through the first and second cam-pins 58, 60 and the first and second cam grooves 62, 72.

### (Effect)

According to the present embodiment described above, the first diaphragm blade 40 is formed such that the first cam groove 62, the first guide groove 64, the first light-shielding plate portion 66, the first aperture-forming edge portion 68 and the second guide groove 70 are arranged in this order along the shifting direction without overlapping one another. In addition, the second diaphragm blade 42 is formed such that the second cam groove 72, the third guide groove 74, the second aperture-forming edge portion 76, the second light-shielding plate portion 78 and the fourth guide groove 80 are arranged in this order along the shifting direction without overlapping one another.

Thus, the first and second diaphragm blades 40, 42 can be reduced in the space occupied thereby in the direction perpendicular to the shifting direction of the first and second diaphragm blades 40, 42, which is advantageous to downsize the light quantity adjusting device 38, the lens barrel 14 and the image pickup apparatus 10.

Respective portions, close to the first and second cam grooves 62, 72, of the first and second diaphragm blades 40, 42 have outer shapes not interfering with the first and second cam-pins 58, 60. Therefore, the area of a portion where the first and second diaphragm blades 40, 42 overlap each other in the thickness direction has to be small.

On the other hand, respective portions, away from the first and second cam grooves 62, 72, of the first and second diaphragm blades 40, 42 need not to have an outer shape considering interference with the first and second cam-pins 58, 60. Therefore, the area of a portion where the first and second diaphragm blades 40, 42 overlap each other in the thickness direction may be increased.

Consequently, in the present example embodiment, respective guide pins engaged with the first guide groove 64 and the third guide groove 74 disposed at positions, close to the first and second cam grooves 62, 72, of the first and second diaphragm blades 40, 42 are the two guide pins 48A, 48C independent of each other. In addition, a guide pin engaged with the second guide groove 70 and with the fourth guide groove 80 disposed at a position, away from the first and second cam grooves 62, 72, of the first and second diaphragm blades 40, 42 is the guide pin 48B engaged with both the two guide grooves 70, 80.

In other words, the second guide groove 70 is located at a position more away from the first cam groove 62 than the first guide groove 64 and the fourth guide groove 80 is located at a position more away from the second cam groove 72 than the third guide groove 74. The second guide groove 70 and the fourth guide groove 80 overlap each other. The single guide pin 48B is inserted into the second and fourth guide grooves 70, 80.

In this way, since only the three guide pins are enough to guide the first and second diaphragm blades 40, 42, the space occupied by the first and second diaphragm blades 40, 42 can be reduced. This is further advantageous to downsize the light quantity adjusting device 38, the lens barrel 14 and the image pickup apparatus 10.

Respective portions, close to the first and second cam grooves 62, 72, of the first and second diaphragm blades 40, 42 have an outer shape not interfering with the first and second cam pins 58, 60. Therefore, the shape of the edge portion is complicated.

Thus, the edge portions at the respective portions, close to the first and second cam grooves 62, 72, of the first and second diaphragm blades 40, 42 overlap each other in the thickness direction and intersect each other as viewed from above.

If the edge portions opposed to each other intersect and overlap each other as described above, it is probable that frictional resistance occurring between the edge portions resulting from the shifting of the first and second diaphragm blades 40, 42 may become significant.

Consequently, in the present example embodiment, the number of the projecting ridges engaged with the portion of the first diaphragm blade 40 close to the first cam groove 62 is made greater than that apart from the first cam groove 62. In addition, the number of the projecting ridges engaged with the portion of the second diaphragm blade 42 close to the second cam groove 72 is made greater than that apart from the second cam groove 72.

In this way, since the thickness-directional interval between the first and second diaphragm blades 40, 42 is ensured, the occurrence of fictional resistance between the edge portions resulting from the shifting of the first and second diaphragm blades 40, 42 is prevented. This is advantageous to the stable operation of the first and second diaphragm blades 40, 42 and to the reduction of the power consumption of the actuator 54.

In the present example embodiment the mechanical shutter is configured by the first and second diaphragm blades 40, 42 providing the fully closed state of the diaphragm aperture 2; however, it is arbitrary that the first and second diaphragm blades 40, 42 provide or do not provide the fully closed state of the diaphragm aperture 2. However, if the mechanical shutter is configured by providing the fully closed state of the diaphragm aperture 2 as in the present embodiment, a combination of the mechanical shutter function with the electronic shutter function of the image pickup element 16 can advantageously achieve various shutter operations.

Incidentally, the present example embodiment describes the case where the image pickup apparatus is a digital still camera; however, embodiments of the present invention can widely be applied to image pickup apparatuses such as camera-equipped cell-phones, video cameras, and security cameras.

Additionally, the present example embodiment describes the case where the light quantity adjusting device is applied to the image pickup apparatus; however, embodiments of the present invention are not limited to this. For example, the light amount adjusting device according to at least preferred embodiments of the invention can arbitrarily be used as a light quantity adjusting device of a light source for a projector device.

The present application contains subject matter related to that disclosed in Japanese Priority Patent Application JP 2008-141964 filed in the Japan Patent Office on May 30, 2008, the entire content of which is hereby incorporated by reference.

It should be understood by those skilled in the art that various modifications, combinations, subcombinations and alterations may occur depending on design requirements and other factor in so far as they are within the scope of the appended claims or the equivalents thereof.

## Claims

1. A light quantity adjusting device comprising:
a base formed with a window;
first and second diaphragm blades provided on the base and adapted to adjust a size of a diaphragm aperture;
first and second cam-pins adapted to shift the first and second diaphragm blades; and
a plurality of guide pins provided on the base so as to project therefrom; wherein
the first diaphragm blade includes
a first cam groove engaged with the first cam-pin,
a first guide groove extending linearly and engaged with one of the plurality of guide pins,
a first light-shielding plate portion,
a first aperture-forming edge portion provided at an edge portion of the first light-shielding plate portion to edge one of opposite edge portions of the diaphragm aperture, and
a second guide groove linearly extending in the same direction as that of the first guide groove or parallel to the first guide groove and engaged with one of the plurality of guide pins,
the first cam groove, the first guide groove, the first light-shielding plate portion, the first aperture-forming edge portion and the second guide groove are formed to be arranged in this order in the shifting direction of the first diaphragm blade without overlapping one another,
the second diaphragm blade includes
a second cam groove engaged with the second cam-pin,
a third guide groove extending linearly and engaged with one of the plurality of guide pins,
a second aperture-forming edge portion edging one of the opposite edge portions of the diaphragm aperture,
a second light-shielding plate portion continuous with the second aperture-forming edge portion, and
a fourth guide groove linearly extending in the same direction as that of the third guide groove or parallel to the third guide groove and engaged with one of the plurality of guide pins, and
the second cam groove, the third guide groove, the second aperture-forming edge portion, the second light-shielding plate portion and the fourth guide groove are formed to be arranged in this order in the shifting direction of the second diaphragm blade without overlapping one another.

2. The light quantity adjusting device according to claim 1, wherein
the second guide groove is located at a position more away from the first cam groove than the first guide groove,
the fourth guide groove is located at a position more away from the second cam groove than the third guide groove, and
the second and fourth guide grooves overlap each other and a single guide pin is inserted into the second and fourth guide grooves.

3. The light quantity adjusting device according to claim 1, further comprising:
a holding plate disposed opposite the base so as to be attached thereto; wherein
the first and second diaphragm blades are disposed between the base and the holding plate,
a plurality of projecting ridges are formed on the base at a portion opposed to the first diaphragm blade and on the holding plate at a portion opposed to the first diaphragm blade so as to extend in the shifting direction, the plurality of projecting ridges being engaged with the first diaphragm blade to position the first diaphragm blade in a thickness direction of the first diaphragm blade, and
a plurality of projecting ridges are formed on the base at a portion opposed to the second diaphragm blade and on the holding plate at a portion opposed to the second diaphragm blade so as to extend in the shifting direction, the plurality of projecting ridges being engaged with the second diaphragm blade to position the second diaphragm blade in a thickness direction of the second diaphragm blade.

4. The light quantity adjusting device according to claim 1, further comprising:
a holding plate disposed opposite the base so as to be attached thereto; wherein
the first and second diaphragm blades are disposed between the base and the holding plate,
a plurality of projecting ridges are formed on the base at a portion opposed to the first diaphragm blade and on the holding plate at a portion opposed to the first diaphragm blade so as to extend in the shifting direction, the plurality of projecting ridges being engaged with the first diaphragm blade to position the first diaphragm blade in a thickness direction of the first diaphragm blade,
the number of the projecting ridges engaged with a portion of the first diaphragm blade close to the first cam groove is greater than that engaged with a portion of the first diaphragm away from the first cam groove,
a plurality of projecting ridges are formed on the base at a portion opposed to the second diaphragm blade and on the holding plate at a portion opposed to the second diaphragm blade so as to extend in the shifting direction, the plurality of projecting ridges being engaged with the second diaphragm blade to position the second diaphragm blade in a thickness direction of the second diaphragm blade, and
the number of the projecting ridges engaged with a portion of the second diaphragm blade close to the second cam groove is greater than that engaged with a portion of the second diaphragm away from the second cam groove.

5. A lens barrel equipped with a light quantity adjusting device, the light quantity adjusting device comprising:
a base formed with a window;
first and second diaphragm blades provided on the base and adapted to adjust a size of a diaphragm aperture;
first and second cam-pins adapted to shift the first and second diaphragm blades; and
a plurality of guide pins provided on the base so as to project therefrom; wherein
the first diaphragm blade includes
a first cam groove engaged with the first cam-pin,
a first guide groove extending linearly and engaged with one of the plurality of guide pins,
a first light-shielding plate portion,
a first aperture-forming edge portion provided at an edge portion of the first light-shielding plate portion to edge one of opposite edge portions of the diaphragm aperture, and
a second guide groove linearly extending in the same direction as that of the first guide groove or parallel to the first guide groove and engaged with one of the plurality of guide pins,
the first cam groove, the first guide groove, the first light-shielding plate portion, the first aperture-forming edge portion and the second guide groove are formed to be arranged in this order in the shifting direction of the first diaphragm blade without overlapping one another,
the second diaphragm blade includes
a second cam groove engaged with the second cam-pin,
a third guide groove extending linearly and engaged with one of the plurality of guide pins,
a second aperture-forming edge portion edging one of the opposite edge portions of the diaphragm aperture,
a second light-shielding plate portion continuous with the second aperture-forming edge portion, and
a fourth guide groove linearly extending in the same direction as that of the third guide groove or parallel to the third guide groove and engaged with one of the plurality of guide pins, and
the second cam groove, the third guide groove, the second aperture-forming edge portion, the second light-shielding plate portion and the fourth guide groove are formed to be arranged in this order in the shifting direction of the second diaphragm blade without overlapping one another.

6. An image pickup apparatus equipped with a light quantity adjusting device, the light quantity adjusting device comprising:
a base formed with a window;
first and second diaphragm blades provided on the base and adapted to adjust a size of a diaphragm aperture;
first and second cam-pins adapted to shift the first and second diaphragm blades; and
a plurality of guide pins provided on the base so as to project therefrom; wherein
the first diaphragm blade includes
a first cam groove engaged with the first cam-pin,
a first guide groove extending linearly and engaged with one of the plurality of guide pins,
a first light-shielding plate portion,
a first aperture-forming edge portion provided at an edge portion of the first light-shielding plate portion to edge one of opposite edge portions of the diaphragm aperture, and
a second guide groove linearly extending in the same direction as that of the first guide groove or parallel to the first guide groove and engaged with one of the plurality of guide pins,
the first cam groove, the first guide groove, the first light-shielding plate portion, the first aperture-forming edge portion and the second guide groove are formed to be arranged in this order in the shifting direction of the first diaphragm blade without overlapping one another,
the second diaphragm blade includes
a second cam groove engaged with the second cam-pin,
a third guide groove extending linearly and engaged with one of the plurality of guide pins,
a second aperture-forming edge portion edging one of the opposite edge portions of the diaphragm aperture,
a second light-shielding plate portion continuous with the second aperture-forming edge portion, and
a fourth guide groove linearly extending in the same direction as that of the third guide groove or parallel to the third guide groove and engaged with one of the plurality of guide pins, and
the second cam groove, the third guide groove, the second aperture-forming edge portion, the second light-shielding plate portion and the fourth guide groove are formed to be arranged in this order in the shifting direction of the second diaphragm blade without overlapping one another.
